# EUROPEAN PATENT APPLICATION

(11) **EP 4 756 947 A1**
(43) Date of publication of application: **10.06.2026**
(21) Application number: 24876254.4
(22) Date of filing: 15.08.2024
(51) Int. Cl.: H01M 10/04, B65G 37/02, B65G 47/22, B65D 19/44

(54) **TRAY DEVICE, BATTERY PRODUCTION LINE, AND REPLACEMENT METHOD FOR PRESSURIZING MEMBER OF TRAY DEVICE**

(30) Priority: 11.10.2023 CN 202311310276
(71) Applicant: Contemporary Amperex Technology Co., Limited, Ningde, Fujian 352100 (CN)
(72) Inventor: YANG, Yule, Ningde, Fujian 352100 (CN); LI, Bingchao, Ningde, Fujian 352100 (CN); CHEN, Wentao, Ningde, Fujian 352100 (CN)
(74) Representative: Lorenz Seidler Gossel Part. mbB
(86) International application number: PCT/CN2024/112411
(87) International publication number: WO 2025/077434

(57) **Abstract**

Embodiments of the present disclosure provide a tray device, a battery production line, and a replacement method for a pressurizing member of a tray device. The tray device comprises a tray and at least one pressurizing mechanism arranged on the tray; the pressurizing mechanism comprises end plate pressurizing tools arranged in pairs; the end plate pressurizing tools arranged in pairs are used for pressurizing battery modules in a first direction; at least one end plate pressurizing tool comprises a mounting seat and a pressurizing member; the pressurizing member is used for being in contact with an end plate of each battery module; an insertion slot is formed in one of the mounting seat and the pressurizing member, and the other of the mounting seat and the pressurizing member is provided with an insertion member, the insertion member is fitted into the insertion slot so as to detachably mount the pressurizing member onto the mounting seat; the insertion member is fitted into the insertion slot in a second direction of the tray device, wherein the second direction is perpendicular to the first direction; moreover, the pressurizing member can move upwards under the action of external force to be separated from the mounting seat.

## Description

### CROSS-REFERENCE TO RELATED APPLICATION

The present disclosure is presented based on Chinese Patent Application No. 202311310276.5, filed on October 11, 2023 and entitled "TRAY APPARATUS, BATTERY PRODUCTION LINE, AND METHOD FOR REPLACING PRESSING MEMBER OF TRAY APPARATUS", and claims priority to the Chinese Patent Application, the content of which is incorporated herein by reference in its entirety.

### TECHNICAL FIELD

The present disclosure relates to the technical field of batteries, and in particular, to a tray apparatus, a battery production line, and a method for replacing a pressing member of a tray apparatus.

### BACKGROUND

This part is intended to provide background or context for embodiments of the present disclosure. The description herein is not recognized as the prior art by virtue of inclusion in this part.

New energy batteries are increasingly widely used in life and industry. For example, new energy vehicles equipped with batteries have been widely used. In addition, batteries are also increasingly used in the field of energy storage.

A power battery pack is used as an example. The power battery pack includes a plurality of battery module groups, and the battery module groups need to be pressed in an assembly process of the battery module groups. To accurately and efficiently press battery module groups of different dimensions, a pressing member of a pressing apparatus needs to be adapted to the dimension of the battery module group. Therefore, different pressing members need to be replaced to press different battery module groups. However, the replacement operation of a pressing member in an existing production line is complex, and the replacement efficiency is low.

### SUMMARY

In view of this, embodiments of the present disclosure are intended to provide a tray apparatus, a battery production line, and a method for replacing a pressing member of a tray apparatus, to mitigate problems of complex replacement operations and low replacement efficiency of the pressing member.

The embodiments of the present disclosure provide a tray apparatus. The tray apparatus includes a tray and at least one pressing mechanism disposed on the tray, where
the pressing mechanism includes end plate pressing tools disposed in pairs, and the end plate pressing tools disposed in pairs are configured to press a battery module group in a first direction;
at least one end plate pressing tool includes a mounting base and a pressing member, the pressing member is configured to be in contact with an end plate of the battery module group, one of the mounting base and the pressing member is provided with an insertion slot, the other one of the mounting base and the pressing member is provided with an insertion member, and the insertion member is in insertion fit with the insertion slot, to detachably mount the pressing member to the mounting base; and the insertion member is inserted into the insertion slot in a second direction of the tray apparatus, the second direction is perpendicular to the first direction, and the pressing member is capable of moving upward to disengage from the mounting base under an external acting force.

In the tray apparatus, the insertion member is in insertion fit with the insertion slot. During assembly, the pressing member only needs to move linearly in an insertion direction. During disassembly, the pressing member only needs to move linearly in a direction opposite to the insertion direction. The mode of movement is single, with no need to disassemble and assemble screws, such that rapid assembly and disassembly of the pressing member and the mounting base are enabled, facilitating convenient operation. Therefore, the problems of complex replacement operations and low replacement efficiency of the pressing member are mitigated. This helps reduce assembly costs and enable an automated machine operation.

During assembly, the pressing member is inserted into the mounting base from top to bottom, and then the pressing member is maintained at the insertion position by the weight of the pressing member. In addition, in a process in which the pressing member presses the battery module group, the pressing member is substantially not subjected to an upward acting force. Therefore, the pressing member can be reliably maintained at the insertion position even if the upward movement of the pressing member is not limited. In addition, the weight of the pressing member does not generate a component force in a horizontal direction on the pressing member. This helps improve the reliability of the pressing member.

In some embodiments, the mounting base is provided with a first positioning surface on a side facing the pressing member, the pressing member is provided with a second positioning surface on a side facing the mounting base, and the first positioning surface and the second positioning surface are both perpendicular to the first direction and are in contact with each other.

In this way, the contact between the first positioning surface and the second positioning surface facilitates positioning the pressing member. Therefore, a portion of the pressing member that is configured to be in contact with the end plate of the battery module group is maintained at an expected position relative to a vertical plane. This helps the pressing member to press the battery module group in the first direction.

In some embodiments, the mounting base includes a base main body and the insertion member, the first positioning surface is formed on at least a part of the surface of the base main body on a side facing the pressing member, the insertion member is connected to the base main body and protrudes from the first positioning surface in the first direction, and the insertion slot is disposed on the pressing member.

Since the mounting base does not need to be removed from the tray when the pressing member is replaced, the mounting base does not need to be carried or stored, and even if the insertion member protrudes from the first positioning surface, the insertion member is less likely to collide with another component. The insertion slot is disposed on the pressing member, and a part of the pressing member may not be provided with obvious protrusions. This helps improve the anti-collision reliability of the pressing member, and facilitates storing and carrying the pressing member.

In some embodiments, the pressing mechanism includes a first fastener, and the insertion member is detachably connected to the base main body via the first fastener.

Since the insertion member does not need to be disassembled when the pressing member is replaced, even if the insertion member is connected to the base main body via the first fastener, convenience of replacing the pressing member is not affected. In addition, by using the first fastener, the type of the insertion member may also be changed without altering the structure of the base main body, to meet the mounting requirements of pressing members of different types.

In some embodiments, the pressing member includes a connection block and a pressing block, the connection block and the pressing block are of a split-type structure, the pressing block is disposed on a side of the connection block facing the battery module group, the pressing block is configured to be in contact with the end plate of the battery module group, and the insertion slot or the insertion member is disposed on the connection block.

The pressing block and the connection block are connected as two independent parts. In the embodiments, the pressing block and the connection block can be conveniently processed separately, and then connected together, thereby reducing the difficulty and costs of processing the pressing member.

In some embodiments, the pressing block is a plastic member or a rubber member; and/or, the connection block is a metal piece.

When the pressing block is a plastic member or a rubber member, probability of damage to the battery module group by the pressing block can be reduced, and molding and manufacturing are simple. When the connection block is a metal piece, strength of the connection block can be ensured, thereby improving connection strength and reliability between the pressing member and the mounting base.

In some embodiments, the pressing mechanism includes a second fastener, and the pressing block is detachably connected to the connection block via the second fastener.

In the embodiments, if the design shapes and the design dimensions of the insertion member and the insertion slot are changed while a design shape and a design dimension of the pressing block remain unchanged, the pressing block does not need to be replaced. Therefore, material costs are reduced. If the design shapes and the design dimensions of the insertion member and the insertion slot remain unchanged while the design shape and the design dimension of the pressing block are changed, the connection block does not need to be replaced. Therefore, material costs are reduced. In addition, for the pressing member, the pressing block needs to be adapted to the type of the battery module group, and the connection block needs to be adapted to the type of the mounting base. Therefore, pressing members of different types may be assembled by combining connection blocks of different types and pressing blocks of different types. In this way, the generalization rate can be improved, and the inventory pressure of stagnant materials can be reduced.

In some embodiments, a groove is formed on the connection block, the pressing member includes a limiting block, the limiting block and the connection block are of a split-type structure, and the limiting block is disposed at an edge of the groove and defines the insertion slot with the groove.

In the embodiments, a part of the insertion member is constrained in the groove via the limiting block, to prevent the insertion member from disengaging from the insertion slot in the first direction. In addition, processing difficulty of the groove may be simplified.

In some embodiments, a recessed region is disposed on a side of the connection block facing the mounting base, the limiting block is disposed in the recessed region, and the limiting block does not protrude from the surface of the connection block on the side facing the mounting base.

In this way, the limiting block does not affect the contact between the first positioning surface and the second positioning surface.

In some embodiments, the pressing member includes a third fastener, and the connection block is detachably connected to the limiting block via the third fastener.

In this way, the connection block is reliably connected to the limiting block. In addition, in a process of replacing the pressing member, the connection block and the limiting block do not need to be disassembled and assembled. Therefore, even if the connection block is connected to the limiting block via the third fastener, replacement of the pressing member is not affected.

In some embodiments, the pressing mechanism includes a driving mechanism and a pair of side plate tools, the pair of side plate tools is configured to bear the battery module group, and the driving mechanism is configured to drive the side plate tools to move in directions away from each other or directions close to each other, to adjust the distance between the two side plate tools.

The distance between the pair of side plate tools needs to match a dimension of the battery module group. Therefore, when the dimension of the battery module group is changed, the distance between the pair of side plate tools may be adaptively adjusted based on the type of the battery module group.

In some embodiments, the tray apparatus includes a guide rail, the guide rail is disposed on the tray, and the guide rail is in sliding fit with the pair of side plate tools and configured to guide the side plate tools in a sliding manner.

The guide rail can improve stability and reliability of the side plate tools in a sliding process, such that position precision of the side plate tools is more reliable.

In some embodiments, there are at least two pressing mechanisms, and the pressing mechanisms are arranged side by side in a manner perpendicular to the first direction; a single pressing mechanism includes a pair of side plate tools, and the pair of side plate tools is configured to bear the battery module group; and
the tray apparatus includes at least two synchronization mechanisms, side plate tools of the pressing mechanisms on a first side in a side-by-side direction are connected via one part of the synchronization mechanisms, and side plate tools of the pressing mechanisms on a second side in the side-by-side direction are connected via the other part of the synchronization mechanisms, such that side plate tools of the pressing mechanisms on a same side in the side-by-side direction synchronously move with a same displacement in a same direction.

When the dimension of the battery module group is not changed, the two side plate tools of the pressing mechanism do not need to be moved and adjusted. When the dimension of the battery module group is changed, the distance between two side plate tools of the remaining pressing mechanisms may be synchronously adjusted by adjusting the distance between two side plate tools of the one pressing mechanism. This improves adjustment efficiency.

In some embodiments, the synchronization mechanism includes a gas spring, the gas spring includes a cylinder barrel and a piston rod, the piston rod is connected to a side plate tool of one pressing mechanism, and the cylinder barrel is connected to a side plate tool of another pressing mechanism.

The gas spring facilitates the adjustment of a stroke. In addition, even if a gas medium in the gas spring leaks, the tray or the battery module group is not easily contaminated.

The embodiments of the present disclosure provide a battery production line. The battery production line includes a gripping mechanism, a storage bin apparatus, and the tray apparatus according to any embodiment of the present disclosure, where the storage bin apparatus is configured to store a plurality of pressing members, and the gripping mechanism is configured to remove and transfer, to the storage bin apparatus, a pressing member on the tray apparatus, and insert a target pressing member on the storage bin apparatus into a mounting base.

In the embodiments, the pressing member and the mounting base are connected through the insertion fit between the insertion member and the insertion slot. Therefore, when the pressing member is removed, it is only necessary to drive the pressing member to move linearly in a direction opposite to the insertion direction, enabling the pressing member to disengage from the mounting base. During assembly, it is only necessary to drive the pressing member to move linearly in the insertion direction, enabling the insertion member to be inserted into the insertion slot. This operation is simple, and facilitates automatic replacement of the pressing member.

The embodiments of the present disclosure provide a method for replacing a pressing member of a tray apparatus. The method includes:
clamping an existing pressing member on the tray apparatus, and moving the existing pressing member upward, such that an insertion slot on the existing pressing member disengages from an insertion member on a mounting base, or an insertion member on a pressing member disengages from an insertion slot on the mounting base; and
clamping a target pressing member, moving the target pressing member to a position above the mounting base, and moving the target pressing member from top to bottom, such that an insertion member on the target pressing member is inserted into the insertion slot on the mounting base, or an insertion slot on the target pressing member is inserted into the insertion member on the mounting base.

In the replacement method according to the embodiments of the present disclosure, during disassembly, the pressing member can disengage from the mounting base only by moving the existing pressing member upward by a specific distance, to achieve the removal of the pressing member. During assembly, the insertion member can be inserted into the insertion slot only by aligning the insertion slot or the insertion member of the target pressing member with the insertion member or the insertion slot on the mounting base and moving the target pressing member downward, to achieve the assembly of the pressing member. The disassembly operation and the assembly operation are relatively simple, which facilitates the replacement of the pressing member.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present disclosure. Throughout all the accompanying drawings, the same components are denoted by the same reference numerals. In the drawings:
FIG. 1 is a schematic diagram of a tray apparatus according to an embodiment of the present disclosure;
FIG. 2 is a schematic diagram of the structure shown in FIG. 1 from another perspective;
FIG. 3 is a schematic diagram of an end plate pressing tool according to an embodiment of the present disclosure;
FIG. 4 is a schematic diagram of the structure shown in FIG. 3 from another perspective;
FIG. 5 is a schematic exploded view of the structure shown in FIG. 3 from another perspective;
FIG. 6 is a schematic diagram of a pressing member according to an embodiment of the present disclosure;
FIG. 7 is a schematic diagram of the structure shown in FIG. 6 from another perspective;
FIG. 8 is a schematic diagram of the structure shown in FIG. 5 from another perspective;
FIG. 9 is a sectional view in a direction C-C in FIG. 4; and
FIG. 10 is a schematic flowchart of a method for replacing a pressing member according to an embodiment of the present disclosure.

### Description of the reference numerals:

1-tray;
2-pressing mechanism; 21-end plate pressing tool; 211-mounting base; 2111-base main body; 2111a-first positioning surface; 2112-insertion member; 212-pressing member; 212a-insertion slot; 2121-pressing block; 2122-connection block; 2122a-groove; 212b-second positioning surface; 212c-recessed region; 2123-limiting block; 22-side plate tool; 5-guide rail; 24-driving mechanism; 241-gear; 242-rack;
3-synchronization mechanism; 31-piston rod; 32-cylinder barrel.

### DETAILED DESCRIPTION

Embodiments of the technical solutions of the present disclosure will be described in detail below with reference to the drawings. The following embodiments are only used to more clearly illustrate the technical solutions of the present disclosure, and therefore, are only exemplary and do not limit the protection scope of the present disclosure.

Unless otherwise defined, all technical and scientific terms used herein have the same meaning as commonly understood by those skilled in the technical field to which the present disclosure belongs. The terms used herein are only used to illustrate the specific embodiments, rather than limit the present disclosure. The terms "include", "comprise", "have", and "provided with", and any variants thereof in the present disclosure are intended to cover non-exclusive inclusions.

In the description of the embodiments of the present disclosure, technical terms such as "first", "second", "third", and the like are only used to distinguish different objects and should not be construed as indicating or implying relative importance or implicitly indicating the number, specific order, or primary and secondary relationship of indicated technical features. In the description of the embodiments of the present disclosure, unless otherwise specifically defined, "plurality of" means two or more.

Reference in the present application to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present disclosure, the term "and/or" is merely a way to describe the associative relationship between associated objects, indicating that there are three possible relationships. For example, "D and/or F" may denote: the presence of D alone, the simultaneous presence of D and F, and the presence of F alone. In addition, the character "/" herein generally indicates an "or" relationship between the associated objects before and after the "/".

In the description of the embodiments of the present disclosure, the technical terms "length", "width", "thickness", "upper", "lower", "front", "rear", "left", "right", "vertical", "horizontal", "top", "bottom", "inner", "outer", "circumferential", and the like indicate orientations or positional relationships based on those shown in the drawings. They are merely for the convenience of describing the embodiments of the present disclosure and simplifying the description, rather than indicating or implying that the apparatus or element referred to must have a specific orientation or be constructed, operated, or used in the specific orientation, and thus should not be construed as a limitation to the embodiments of the present disclosure.

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise clearly specified and limited, the technical term "contact" should be interpreted in a broad sense. For example, the "contact" may be direct contact, or contact through an intermediate medium layer, or contact without an interaction force between two contacting elements, or contact with an interaction force between two contacting elements.

With the vigorous promotion of new energy vehicles by China, the new energy vehicles have embraced an excellent opportunity for development. Safety and stability have always been the top concerns for vehicles. Therefore, improving the safety of the new energy vehicles will be one of the important factors that determine whether the new energy vehicles can be popularized rapidly. Since a battery module group is a main component of the battery pack of a new energy vehicle, improving the safety of the battery module group is an important way to improve the safety of the new energy vehicle.

A battery module group generally includes a plurality of battery cells. The battery cells are limited in a module frame formed by welding end plates and side plates. In an assembly process of the module group, end plates at two ends of the module group exert a certain preloading force on a battery, to enhance and improve cycle performance of the battery.

Therefore, in the assembly process of the battery module group, the battery module group needs to be pressed, enabling the end plates at the two ends of the module group to exert a certain preloading force on the battery. To accurately and efficiently press battery module groups of different dimensions, a pressing member of a pressing mechanism needs to be adapted to the dimension of the battery module group. Therefore, when the dimension of a battery module group on a battery production line is changed, different pressing members need to be replaced to press different battery module groups.

However, a pressing member on an existing battery production line is generally fixed on a tray via a plurality of screws in a pressing direction of the battery module group. When it is necessary to replace the pressing member, the plurality of screws need to be unscrewed to remove the existing pressing member, the replacement pressing member is then positioned, and the plurality of screws are retightened. The replacement operation is complex, inefficient, and costly. For example, if the operation is performed manually, it requires a large quantity of man-hours, resulting in low replacement efficiency and high labor costs. If machine-based automated replacement is adopted, in one aspect, since the machine needs to screw the plurality of screws, it requires a high degree of spatial movement freedom, making the automated operation inconvenient and increasing machine costs; in another aspect, when the last screw is removed, the pressing member may fail to be positioned and may fall off, which is also unfavorable for the automated operation of a single machine.

In order to resolve problems such as complex replacement operations, low replacement efficiency, and difficulty in achieving automation, the embodiments of the present disclosure provide a tray apparatus. The tray apparatus includes a tray and at least one group of pressing mechanisms disposed on the tray. The pressing mechanism includes end plate pressing tools disposed in pairs, and the end plate pressing tools disposed in pairs are configured to press a battery module group in a first direction. At least one end plate pressing tool includes a mounting base and a pressing member. The pressing member is configured to be in contact with an end plate of the battery module group. One of the mounting base and the pressing member is provided with an insertion slot, the other one of the mounting base and the pressing member is provided with an insertion member. The insertion member is in insertion fit with the insertion slot, to detachably mount the pressing member to the mounting base.

In the tray apparatus, the insertion member is in insertion fit with the insertion slot. During assembly, the pressing member only needs to move linearly in an insertion direction. During disassembly, the pressing member only needs to move linearly in a direction opposite to the insertion direction. The mode of movement is single, with no need to disassemble and assemble screws, such that rapid assembly and disassembly of the pressing member and the mounting base are enabled, facilitating convenient operation. Therefore, the problems of complex replacement operations and low replacement efficiency of the pressing member are mitigated. This helps reduce assembly costs and enable an automated machine operation.

The tray apparatus according to the embodiments of the present disclosure may be configured to stack battery module groups in a battery production process. The battery module group is provided with a plurality of battery cells. The plurality of battery cells are arranged in the first direction, an end plate is disposed at each of two ends in the arrangement direction, and each battery cell is located between the two end plates. End plate pressing tools in pairs apply an acting force to the two end plates, and the two end plates move in directions close to each other, to enable the battery cells to be closely arranged.

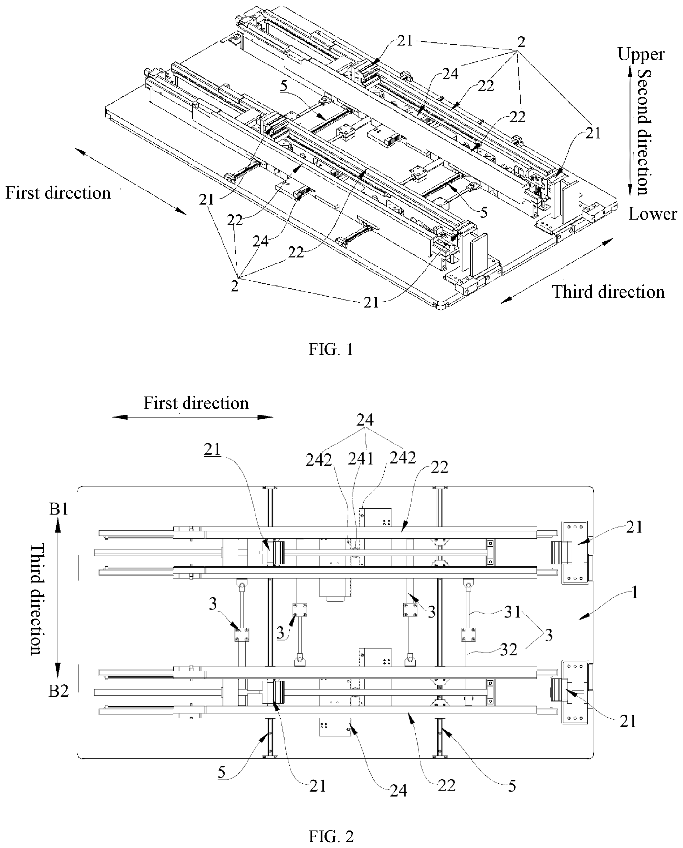

According to some embodiments of the present disclosure, referring to FIGs. 1 and 2, the embodiments of the present disclosure provide a tray apparatus. The tray apparatus includes a tray 1 and at least one group of pressing mechanisms 2 disposed on the tray 1. The at least one group of pressing mechanisms 2 means that there may be only one pressing mechanism 2, or there may be two or more pressing mechanisms.

The pressing mechanism 2 includes end plate pressing tools 21 disposed in pairs. In other words, a pair of end plate pressing tools is formed by every two end plate pressing tools 21.

The end plate pressing tools 21 disposed in pairs are configured to press the battery module group in the first direction. The first direction is a pressing direction. For example, the battery module group includes a plurality of cells, and the plurality of cells are stacked in the first direction; that is, a pressing direction of the end plate pressing tools 21 is the same as a stacking direction of the cells.

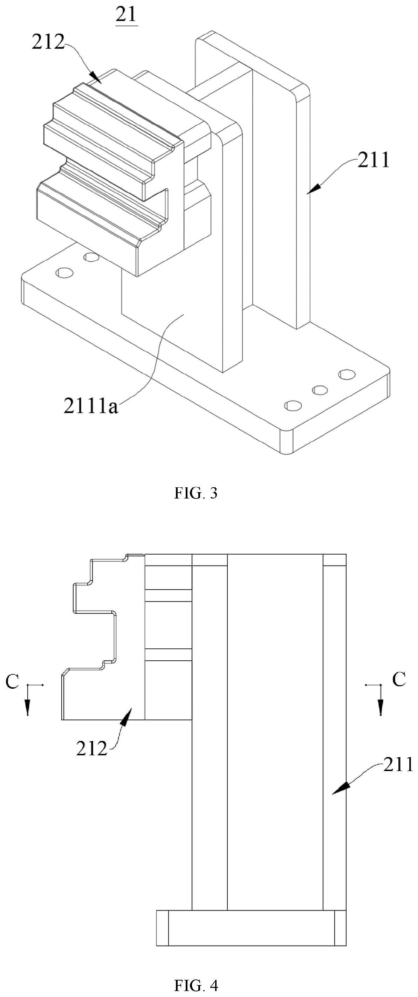

Referring to FIGs. 3 and 4, at least one end plate pressing tool 21 includes a mounting base 211 and a pressing member 212. The pressing member 212 is configured to be in contact with the end plate of the battery module group. That is, the mounting base 211 is not in contact with the end plate of the battery module group.

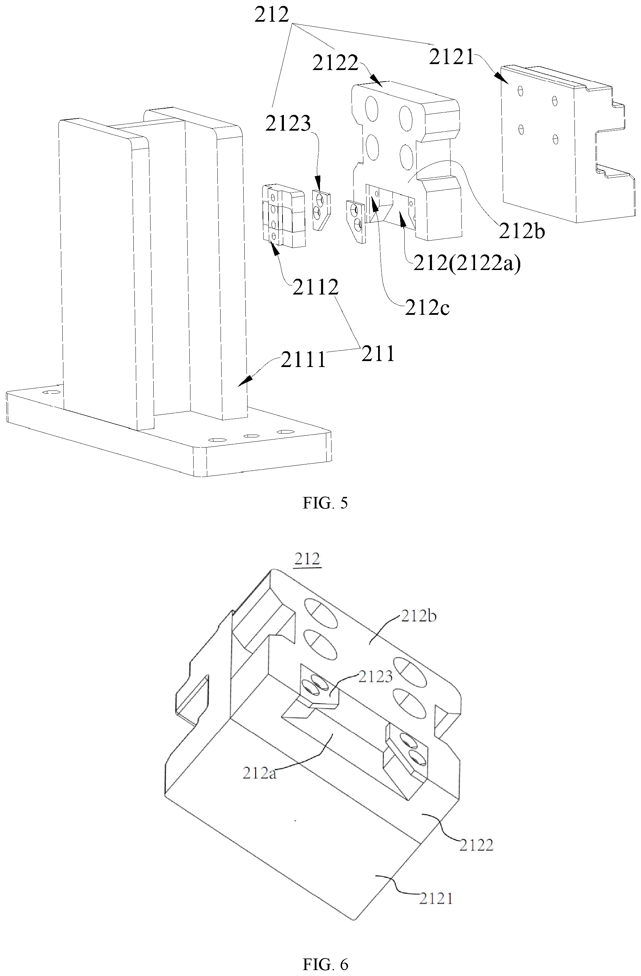

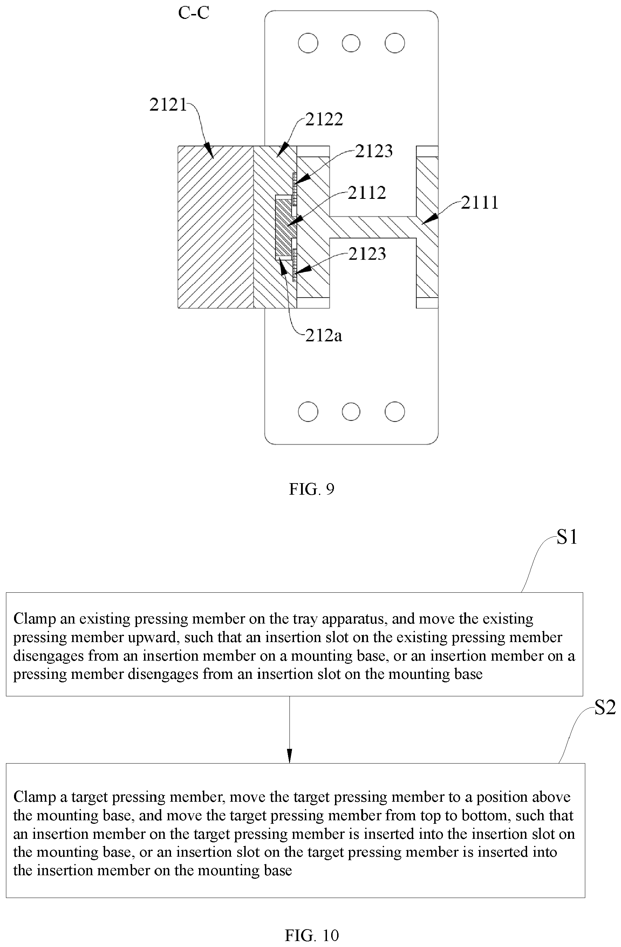

Referring to FIG. 5, one of the mounting base 211 and the pressing member 212 is provided with an insertion slot 212a, and the other one of the mounting base and the pressing member is provided with an insertion member 2112. Referring to FIG. 9, the insertion member 2112 is in insertion fit with the insertion slot 212a, to detachably mount the pressing member 212 to the mounting base 211.

The pressing member 212 refers to a structure configured to press the end plate of the battery module group. In a pressing process, since the pressing member 212 is in contact with the end plate of the battery module group, damage to the battery module group by a compression apparatus is avoided. For different battery module groups, the positions to which forces are applied are different. Therefore, for battery module groups of different types, different pressing members 212 may be replaced to press the battery module groups.

It should be noted that one of the mounting base 211 and the pressing member 212 being provided with the insertion slot 212a, and the other one of the mounting base and the pressing member being provided with the insertion member 2112 means that the mounting base 211 may be provided with the insertion member 2112, and the pressing member 212 may be provided with the insertion slot 212a; or the mounting base 211 may be provided with the insertion slot 212a, and the pressing member 212 may be provided with the insertion member 2112.

Certainly, in other embodiments, alternatively, the mounting base 211 may be provided with the insertion member 2112 and the insertion slot 212a, and the pressing member 212 may also be provided with the insertion member 2112 and the insertion slot 212a. The insertion member 2112 on the pressing member 212 is in insertion fit with the insertion slot 212a on the mounting base 211, and the insertion slot 212a on the pressing member 212 is in insertion fit with the insertion member 2112 on the mounting base 211.

It should be noted that, when the insertion member 2112 is in insertion fit with the insertion slot 212a, the insertion member 2112 cannot rotate relative to the insertion slot 212a, and in the absence of other acting forces applied to the pressing member 212, the pressing member 212 is capable of being maintained at an insertion position.

In the tray apparatus according to the embodiments of the present disclosure, the insertion member 2112 is inserted into the insertion slot 212a. Whether during assembly or disassembly, only linear movement of the pressing member 212 in an insertion direction or a direction opposite to the insertion direction is required. The single mode of movement enables rapid assembly and disassembly of the pressing member 212 and the mounting base 211, facilitating convenient operation. Therefore, the problems of complex replacement operations and low replacement efficiency of the pressing member 212 are mitigated. This helps reduce assembly costs and enable an automated machine operation.

The insertion direction of the insertion member 2112 into the insertion slot 212a is not limited; for example, it may be a horizontal direction, a vertical direction, or a direction forming an acute included angle with the vertical direction, provided that the pressing member 212 is capable of being maintained at the insertion position.

Illustratively, the insertion member 2112 is inserted into the insertion slot 212a in a second direction, the second direction is perpendicular to the first direction, and the pressing member 212 is capable of moving upward to disengage from the mounting base 211 under an external acting force. In other words, the second direction is substantially parallel to a height direction of the tray apparatus. For example, the height direction is consistent with an upper-lower direction in FIG. 1. In the embodiments, during assembly, the pressing member 212 is inserted into the mounting base 211 from top to bottom, and then the pressing member 212 is maintained at the insertion position by the weight of the pressing member 212. In addition, in a process in which the pressing member 212 presses the battery module group, the pressing member 212 is substantially not subjected to an upward acting force. Therefore, the pressing member 212 can be reliably maintained at the insertion position even if the upward movement of the pressing member 212 is not limited. In addition, the weight of the pressing member 212 does not generate a component force in a horizontal direction on the pressing member 212. This helps improve the reliability of the pressing member 212.

In other embodiments, the directions of the insertion member 2112 and the insertion slot 212a may alternatively form an included angle not exceeding 30° with the vertical direction. During disassembly, the pressing member 212 is capable of obliquely moving upward and disengaging from the mounting base 211 under an external force.

In some embodiments, the insertion slot 212a is similar to a dovetail groove, the structure of the insertion member 2112 is similar to a tenon, and the fitting relationship between the insertion slot 212a and the insertion member 2112 is similar to a tenon-and-mortise structure. In this way, the mounting base 211 is in reliable insertion fit with the pressing member 212 via the tenon-and-mortise structure, without using fasteners such as screws.

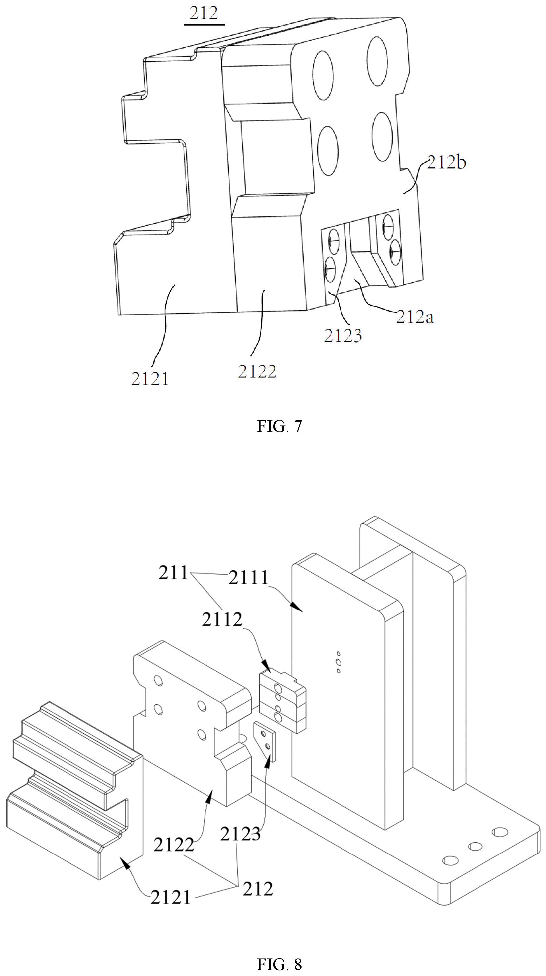

Illustratively, referring to FIGs. 5 and 8, the mounting base 211 is provided with a first positioning surface 2111a on a side facing the pressing member 212, and the pressing member 212 is provided with a second positioning surface 212b on a side facing the mounting base 211. The first positioning surface 2111a and the second positioning surface 212b are both perpendicular to the first direction and are in contact with each other. In this way, the contact between the first positioning surface 2111a and the second positioning surface 212b facilitates positioning the pressing member 212. Therefore, a portion of the pressing member 212 that is configured to be in contact with the end plate of the battery module group is maintained at an expected position relative to a vertical plane. This helps the pressing member 212 to press the battery module group in the first direction.

The first positioning surface 2111a and the second positioning surface 212b being both perpendicular to the first direction means that the first positioning surface 2111a is perpendicular to the first direction, the second positioning surface 212b is also perpendicular to the first direction, and the first positioning surface 2111a and the second positioning surface 212b are parallel to each other. Specifically, the first direction is substantially the horizontal direction, and the first positioning surface 2111a and the second positioning surface 212b are substantially vertical planes.

In the embodiments, the first positioning surface 2111a may be used as a reference plane for mounting the pressing member 212. A mounting position of the pressing member 212 is determined based on the contact between the first positioning surface 2111a and the second positioning surface 212b. This helps maintain stability of a position at which the pressing member 212 is in contact with the battery module group.

Illustratively, referring to FIGs. 5, 6, and 7, the insertion slot 212a is disposed on the pressing member 212. Referring to FIG. 8, the mounting base 211 includes a base main body 2111 and the insertion member 2112. The first positioning surface 2111a is formed on at least a part of the surface of the base main body 2111 on a side facing the pressing member 212, and the insertion member 2112 is connected to the base main body 2111 and protrudes from the first positioning surface 2111a in the first direction. In this way, the first insertion member 2112 can be conveniently inserted into the insertion slot 212a. Since the mounting base 211 does not need to be removed from the tray 1 when the pressing member 212 is replaced, the mounting base 211 does not need to be carried or stored, and even if the insertion member 2112 protrudes from the first positioning surface 2111a, the insertion member 2112 is less likely to collide with another component. The insertion slot 212a is disposed on the pressing member 212, and a part of the pressing member 212 may not be provided with obvious protrusions. This helps improve the anti-collision reliability of the pressing member 212, and facilitates storing and carrying the pressing member 212.

The connection relationship between the insertion member 2112 and the base main body 2111 is not limited.

Illustratively, the insertion member 2112 is detachably connected to the base main body 2111; that is, the insertion member 2112 and the base main body 2111 are connected as two independent parts. In this way, the base main body 2111 and the insertion member 2112 can be conveniently processed separately, and then connected together, thereby reducing the difficulty and costs of processing the mounting base 211. In addition, if the design shapes and the design dimensions of the insertion member 2112 and the insertion slot 212a are changed, the base main body 2111 does not need to be replaced or removed, and only the changed insertion member 2112 needs to be replaced.

The detachable connection manner between the insertion member 2112 and the base main body 2111 is not limited.

For example, in some embodiments, the pressing mechanism 2 includes a first fastener, and the insertion member 2112 is detachably connected to the base main body 2111 via the first fastener. Since the insertion member 2112 does not need to be disassembled when the pressing member 212 is replaced, even if the insertion member is connected to the base main body via the first fastener, convenience of replacing the pressing member 212 is not affected. In addition, by using the first fastener, the type of the insertion member 2112 may also be changed without altering the structure of the base main body 2111, to meet the mounting requirements of pressing members 212 of different types. The first fastener may be a screw, a bolt, or the like, which is not limited herein.

In some more specific embodiments, the insertion member 2112 is provided with a countersunk hole, the first fastener passes through the countersunk hole in the first direction and is screwed into the base main body 2111, and an end cap of the first fastener is located in the countersunk hole, so as not to affect the fit between the insertion member 2112 and the insertion slot 212a.

In some other embodiments, the base main body 2111 and the insertion member 2112 are of an integrated structure. Due to the integrated mounting base 211, the number of parts can be reduced, assembly time can be reduced, and assembly efficiency can be improved.

The integrated structure refers to a structure formed by integral processing and forming, for example, by integral injection molding, integral casting, or machining from a single blank.

It should be noted that the integral injection molding may be single-color injection molding, two-color injection molding, or the like.

In some embodiments, the pressing member 212 is of an integrated structure, for example, an integrally formed plastic member or an integrally formed metal piece. Due to the integrated pressing member 212, the number of parts can be reduced, assembly time can be reduced, and assembly efficiency can be improved.

In some other embodiments, the pressing member 212 includes a connection block 2122 and a pressing block 2121. The pressing block 2121 is disposed on a side of the connection block 2122 facing the battery module group; that is, the connection block 2122 is disposed on the side of the pressing block 2121 facing the mounting base 211. The pressing block 2121 is configured to be in contact with the end plate of the battery module group, and the insertion slot 212a or the insertion member 2112 is disposed on the connection block 2122.

Illustratively, the connection block 2122 and the pressing block 2121 are of a split-type structure; that is, the pressing block 2121 and the connection block 2122 are connected as two independent parts. In the embodiments, the pressing block 2121 and the connection block 2122 can be conveniently processed separately, and then connected together, thereby reducing the difficulty and costs of processing the pressing member 212.

The specific material of the pressing block 2121 is not limited herein. For example, the pressing block may be a plastic member or a rubber member. In this way, probability of damage to the battery module group by the pressing block 2121 can be reduced, and molding and manufacturing are simple.

The specific material of the connection block 2122 is not limited herein. For example, the connection block may be a metal piece. In this way, strength of the connection block 2122 can be ensured, thereby improving connection strength and reliability between the pressing member 212 and the mounting base 211.

The connection manner between the pressing block 2121 and the connection block 2122 is not limited. For example, in an embodiment in which the pressing block 2121 is a plastic member and the connection block 2122 is a metal piece, the pressing block 2121 may be injection molded on the connection block 2122, so as to be connected together.

In some embodiments, the pressing mechanism 2 includes a second fastener, and the pressing block 2121 is detachably connected to the connection block 2122 via the second fastener. The second fastener may be a screw, a bolt, or the like, which is not limited herein. In the embodiments, if the design shapes and the design dimensions of the insertion member 2112 and the insertion slot 212a are changed while the design shape and the design dimension of the pressing block 2121 remain unchanged, the pressing block 2121 does not need to be replaced. Therefore, material costs can be reduced. If the design shapes and the design dimensions of the insertion member 2112 and the insertion slot 212a remain unchanged while the design shape and the design dimension of the pressing block 2121 are changed, the connection block 2122 does not need to be replaced. Therefore, material costs can be reduced. In addition, for the pressing member, the pressing block 2121 needs to be adapted to the type of the battery module group, and the connection block 2122 needs to be adapted to the type of the mounting base 211. Therefore, pressing members of different types may be assembled by combining connection blocks 2122 of different types and pressing blocks 2121 of different types. In this way, the generalization rate can be improved, and the inventory pressure of stagnant materials can be reduced.

In some embodiments, a desired shape of the insertion slot 212a may be directly processed on the connection block 2122.

In some other embodiments, referring to FIG. 5, a groove 2122a is formed on the connection block 2122, the pressing member 212 includes a limiting block 2123, the limiting block 2123 and the connection block 2122 are of a split-type structure, and the limiting block 2123 is disposed at the edge of the groove 2122a and defines the insertion slot 212a with the groove 2122a.

In the embodiments, a part of the insertion member 2112 is constrained in the groove 2122a via the limiting block 2123, to prevent the insertion member 2112 from disengaging from the insertion slot 212a in the first direction. In addition, the difficulty of processing the groove 2122a can be simplified.

The connection manner between the above limiting block 2123 and the connection block 2122 is not limited. The connection may be a detachable connection, or may be a non-detachable connection. For example, the non-detachable connection manner, such as riveting or welding, may be used, or the detachable connection manner, such as connection via screws or connection via bolts, may be used.

In the embodiments of the present disclosure, the detachable connection means that after two components are connected, the two components can also be released from the connection relationship without destroying the structure of a joint between the two components. The non-detachable connection means that after two components are connected, the connection relationship can be released only by destroying the structure of a joint between the two components.

In some embodiments, the pressing member 212 includes a third fastener, and the connection block 2122 is detachably connected to the limiting block 2123 via the third fastener. In this way, the connection block 2122 is reliably connected to the limiting block 2123. In addition, in a process of replacing the pressing member 212, the connection block 2122 and the limiting block 2123 do not need to be disassembled and assembled. Therefore, even if the connection block is connected to the limiting block via the third fastener, replacement of the pressing member 212 is not affected.

Illustratively, referring to FIG. 5, a recessed region 212c is disposed on a side of the connection block 2122 facing the mounting base 211, the limiting block 2123 is disposed in the recessed region 212c, and the limiting block 2123 does not protrude from the surface of the connection block 2122 on the side facing the mounting base 211.

It should be noted that at least a part of the surface of the connection block 2122 on the side facing the mounting base 211 is the above second positioning surface 212b. In other words, the limiting block 2123 does not protrude from the second positioning surface 212b. In this way, the limiting block 2123 does not affect the contact between the first positioning surface 2111a and the second positioning surface 212b.

It should be noted that the surface of the limiting block 2123 on a side facing the mounting base 211 may be flush with the surface of the connection block 2122 on the side facing the mounting base 211. In this way, the limiting block 2123 may also be in contact with the first positioning surface 2111a of the base main body 2111, thereby increasing the contact area between the pressing member 212 and the mounting base 211, and improving positioning reliability. Certainly, the surface of the limiting block 2123 on the side facing the mounting base 211 may also be recessed into the surface of the connection block 2122 on the side facing the mounting base 211. In the embodiments, the limiting block 2123 is not in contact with the first positioning surface 2111a of the base main body 2111.

In the embodiments of the present disclosure, in a pair of end plate pressing tools 21 of the pressing mechanism 2, only one end plate pressing tool 21 may adopt the structure of the pressing member 212 and the mounting base 211 in any one of the embodiments described above, or the two end plate pressing tools 21 each may adopt the structure of the pressing member 212 and the mounting base 211 in any one of the embodiments described above.

In some embodiments, one end plate pressing tool 21 is a fixing tool, and the other end plate pressing tool 21 is a movable tool. Specifically, in the process of pressing the battery module group, the fixing tool remains stationary, and the movable tool may move in a direction close to the fixing tool in the first direction, to press a battery module. In some other embodiments, both the two end plate pressing tools 21 may be movable tools. That is, in the process of pressing the battery module group, the two end plate processing tools may move in directions close to each other in the first direction.

In the embodiments of the present disclosure, an example in which one end plate pressing tool 21 is the fixing tool and the other end plate pressing tool 21 is the movable tool is used for description.

Illustratively, referring to FIGs. 1 and 2, the pressing mechanism 2 includes a driving mechanism 24 and a pair of side plate tools 22. The pair of side plate tools 22 is configured to bear the battery module group; that is, the battery module group is placed on the pair of side plate tools 22. The driving mechanism 24 is configured to drive the side plate tools 22 to move in directions away from each other or directions close to each other, to adjust the distance between the two side plate tools 22.

The distance between the pair of side plate tools 22 needs to match the dimension of the battery module group. Therefore, when the dimension of the battery module group is changed, the distance between the pair of side plate tools 22 may be adaptively adjusted. When the driving mechanism 24 drives the side plate tools 22 to move in directions away from each other, the distance between the pair of side plate tools 22 increases. When the driving mechanism 24 drives the side plate tools 22 to move in directions close to each other, the distance between the pair of side plate tools 22 decreases.

In some embodiments, in the pair of side plate tools 22, one side plate tool 22 remains stationary relative to the tray 1, and the driving mechanism 24 may only drive the other side plate tool 22 to move, to achieve adjustment of the distance between the pair of side plate tools 22.

In some other embodiments, the two side plate tools 22 may move relative to the tray 1, and the driving mechanism 24 drives the pair of side plate tools 22 to move synchronously.

Illustratively, referring to FIGs. 1 and 2, the tray apparatus includes a guide rail 5. The guide rail 5 is disposed on the tray 1, and the guide rail 5 is in sliding fit with the pair of side plate tools 22 and configured to guide the side plate tools 22 in a sliding manner. The guide rail 5 can improve stability and reliability of the side plate tools 22 in a sliding process, such that position precision of the side plate tools 22 is more reliable.

The number of guide rails 5 is not limited, and there may be one or more guide rails. In an embodiment in which there are a plurality of guide rails 5, the plurality of guide rails 5 are spaced apart and arranged in parallel in the first direction.

The specific structure of the driving mechanism 24 is not limited.

In some embodiments, referring to FIG. 2, the driving mechanism 24 includes a power source, a gear 241, and two racks 242. One rack 242 is connected to one side plate tool 22, the other rack 242 is connected to the other side plate tool 22, and the gear 241 is simultaneously meshed with the two racks 242. The power source may drive the one rack 242 to reciprocate linearly, and the one rack 242 drives, via the gear 241, the other rack 242 to move in an opposite direction. That is, movement directions of the two racks 242 are parallel and opposite. In the embodiments, the power source may be a gas cylinder, an oil cylinder, or the like. In some other embodiments, the power source may be a motor, and the motor drives the gear 241 to rotate, thereby driving the two racks 242 to move in opposite directions.

It should be noted that the number of pressing mechanisms 2 on a single tray 1 is not limited, and there may be one or more pressing mechanisms.

Illustratively, there may be at least two pressing mechanisms 2. The pressing mechanisms 2 are arranged side by side in a manner perpendicular to the first direction. In other words, the pressing mechanisms 2 are arranged side by side in the third direction. A side plate tool 22 of each pressing mechanism 2 extends in the first direction.

Referring to FIG. 2, the tray apparatus includes at least two synchronization mechanisms 3. One side plate tool 22 of each pressing mechanism 2 on a first side in a side-by-side direction is connected via one part of the synchronization mechanisms 3, and the other side plate tool 22 of each pressing mechanism 2 on a second side in the side-by-side direction is connected via the other part of the synchronization mechanisms 3, such that side plate tools 22 of the pressing mechanisms 2 on the same side in the side-by-side direction synchronously move with the same displacement in the same direction.

The side-by-side direction refers to a direction in which the pressing mechanisms 2 are arranged side by side. In the embodiments of the present disclosure, the side-by-side direction is the same as the third direction.

One side plate tool 22 of each pressing mechanism 2 on the first side in the side-by-side direction being connected via one part of the synchronization mechanisms 3, and the other side plate tool 22 of each pressing mechanism 2 on the second side in the side-by-side direction being connected via the other part of the synchronization mechanisms 3 means that the first side and the second side of all pressing mechanisms 2 have the same direction, and the first side and the second side are two opposite sides in the third direction. For example, referring to FIG. 2, in FIG. 2, a direction indicated by an arrow B1 is the first side, and a direction indicated by an arrow B2 is the second side. For a single pressing mechanism 2, one side plate tool 22 close to the direction indicated by the arrow B1 is the one side plate tool 22 on the first side in the side-by-side direction described above, and one side plate tool 22 close to the direction indicated by the arrow B2 is the other side plate tool 22 on the second side in the side-by-side direction described above.

An example in which there are two pressing mechanisms 2 is used. For ease of description, one pressing mechanism 2 is denoted as a first pressing mechanism, and two side plate tools 22 of the first pressing mechanism are respectively denoted as a first side plate tool and a second side plate tool; and the other pressing mechanism 2 is denoted as a second pressing mechanism, and two side plate tools 22 of the second pressing mechanism are respectively denoted as a third side plate tool and a fourth side plate tool.

In a side-by-side direction from B1 to B2, the first side plate tool, the second side plate tool, the third side plate tool, and the fourth side plate tool are sequentially arranged side by side. The first side plate tool is one side plate tool on a first side of the first pressing mechanism in the side-by-side direction, and the second side plate tool is the other side plate tool on a second side of the first pressing mechanism in the side-by-side direction. The third side plate tool is one side plate tool on a first side of the second pressing mechanism in the side-by-side direction, and the fourth side plate tool is the other side plate tool on a second side of the second pressing mechanism in the side-by-side direction. The first side plate tool is connected to the third side plate tool via the same synchronization mechanism 3, enabling the first side plate tool and the third side plate tool to synchronously move with the same displacement in the same direction. The second side plate tool is connected to the fourth side plate tool via another synchronization mechanism 3, enabling the third side plate tool and the fourth side plate tool to synchronously move with the same displacement in the same direction.

It should be noted that, when the dimension of the battery module group is not changed, the two side plate tools 22 of the pressing mechanism 2 do not need to be moved and adjusted. When the dimension of the battery module group is changed, the distance between two side plate tools 22 of the remaining pressing mechanisms 2 may be synchronously adjusted by adjusting the distance between two side plate tools 22 of the one pressing mechanism 2. This improves adjustment efficiency.

The specific structure of the synchronization mechanism 3 is not limited.

Illustratively, the synchronization mechanism 3 includes a gas spring. Referring to FIG. 2, the gas spring includes a cylinder barrel 32 and a piston rod 31. The piston rod 31 is connected to a side plate tool 22 of the one pressing mechanism 2, and the cylinder barrel 32 is connected to a side plate tool 22 of another pressing mechanism 2. In one aspect, the gas spring facilitates adjustment of a stroke; in another aspect, even if the gas medium in the gas spring leaks, the tray 1 or the battery module group is less likely to be contaminated.

The gas spring may be an air spring, a nitrogen spring, or the like.

The embodiments of the present disclosure provide a battery production line. The battery production line includes a gripping mechanism, a storage bin apparatus, and the tray apparatus according to any embodiment of the present disclosure.

The storage bin apparatus is configured to store a plurality of pressing members 212. The plurality of pressing members 212 may include pressing members 212 of different types.

The gripping mechanism is configured to remove and transfer, to the storage bin apparatus, a pressing member 212 on the tray apparatus, and insert a target pressing member 212 on the storage bin apparatus into a mounting base 211.

In the embodiments, the pressing member 212 and the mounting base 211 are connected through the insertion fit between the insertion member 2112 and the insertion slot 212a. Therefore, when the pressing member 212 is removed, it is only necessary to drive the pressing member 212 to move linearly in a direction opposite to the insertion direction, enabling the pressing member 212 to disengage from the mounting base 211. During assembly, it is only necessary to drive the pressing member 212 to move linearly in the insertion direction, enabling the insertion member 2112 to be inserted into the insertion slot 212a. This operation is simple, and facilitates automatic replacement of the pressing member 212.

Illustratively, the gripping mechanism may be a robotic arm.

The embodiments of the present disclosure provide a method for replacing a pressing member of a tray apparatus. Referring to FIG. 10, the method includes the following steps.

In S1, an existing pressing member on the tray apparatus is clamped, and the existing pressing member is moved upward, such that an insertion slot on the existing pressing member disengages from an insertion member on a mounting base, or an insertion member on the pressing member disengages from an insertion slot on the mounting base.

In S2, a target pressing member is clamped, the target pressing member is moved to a position above the mounting base, and the target pressing member is moved from top to bottom, such that an insertion member on the target pressing member is inserted into the insertion slot on the mounting base, or an insertion slot on the target pressing member is inserted into the insertion member on the mounting base.

The existing pressing member refers to a pressing member in the tray apparatus that has been in an inserted state with the mounting base, and the pressing member is a pressing member that needs to be removed from the tray apparatus.

The target pressing member refers to a pressing member, among a plurality of pressing members placed on, for example, the storage bin apparatus, that is determined as the one to be replaced onto the tray apparatus.

In the replacement method according to the embodiments of the present disclosure, during disassembly, the pressing member can disengage from the mounting base only by moving the existing pressing member upward by a specific distance, to achieve the removal of the pressing member; during assembly, the insertion member can be inserted into the insertion slot only by aligning the insertion slot or the insertion member of the target pressing member with the insertion member or the insertion slot on the mounting base and moving the target pressing member downward, to achieve the assembly of the pressing member. The disassembly operation and the assembly operation are relatively simple, which facilitates the replacement of the pressing member.

It should be noted that, in some embodiments, the pressing member may be manually replaced. Specifically, the existing pressing member is directly clamped by hand, or the existing pressing member is clamped by a hand-held tool and is moved upward. Then, the target pressing member is directly clamped by hand, or the target pressing member is clamped by a hand-held tool and is moved downward, to insert the insertion member into the insertion slot.

In some other embodiments, the pressing member may be automatically replaced via the gripping mechanism. Specifically, a method for automatically replacing the pressing member includes the following steps.

In SB1, a gripping mechanism is controlled to clamp an existing pressing member on the tray apparatus, and the gripping mechanism is controlled to move upward with a preset distance, to drive the existing pressing member to disengage from the mounting base.

In SB2, the gripping mechanism is controlled to transfer, to a material placement position of a storage bin apparatus, the existing pressing member that disengages from the mounting base.

In SB3, the gripping mechanism is controlled to grip a target pressing member on the storage bin apparatus, and to transfer the target pressing member to a position above the mounting base.

In SB4, the gripping mechanism is controlled to move downward, to insert the pressing member on the mounting base.

After the step SB4 is completed, the replacement of the pressing member is completed.

In the description of the present disclosure, the description of reference terms "one embodiment", "some embodiments", "an example", "a specific example", "some examples", or the like means that a particular feature, structure, material, or characteristic described in connection with the embodiments or examples is included in at least one embodiment or example of the embodiments of the present disclosure. In the present disclosure, the illustrative expressions of the above terms are not necessarily directed to the same embodiment or example. Moreover, the specific features, structures, materials, or characteristics described may be combined appropriately in any one or more embodiments or examples. In addition, various embodiments or examples and features of various embodiments or examples described in the present disclosure can be combined by one skilled in the art to the extent that they do not contradict each other.

The above are only preferred embodiments of the present disclosure and are not intended to limit the present disclosure. For those skilled in the art, the present disclosure can be modified and varied. Any modifications, equivalent substitutions, improvements, and the like made within the spirit and principle of the present disclosure should fall within the protection scope of the present disclosure.

## Claims

1. A tray apparatus, comprising a tray and at least one pressing mechanism disposed on the tray, wherein
the pressing mechanism comprises end plate pressing tools disposed in pairs, and the end plate pressing tools disposed in pairs are configured to press a battery module group in a first direction;
at least one end plate pressing tool comprises a mounting base and a pressing member, the pressing member is configured to be in contact with an end plate of the battery module group, one of the mounting base and the pressing member is provided with an insertion slot, the other one of the mounting base and the pressing member is provided with an insertion member, and the insertion member is in insertion fit with the insertion slot, to detachably mount the pressing member to the mounting base; the insertion member is inserted into the insertion slot in a second direction of the tray apparatus, the second direction is perpendicular to the first direction, and the pressing member is capable of moving upward to disengage from the mounting base under an external acting force.

2. The tray apparatus according to claim 1, wherein the mounting base is provided with a first positioning surface on a side facing the pressing member, the pressing member is provided with a second positioning surface on a side facing the mounting base, and the first positioning surface and the second positioning surface are both perpendicular to the first direction and are in contact with each other.

3. The tray apparatus according to claim 2, wherein the mounting base comprises a base main body and the insertion member, the first positioning surface is formed on at least a part of a surface of the base main body on a side facing the pressing member, the insertion member is connected to the base main body and protrudes from the first positioning surface in the first direction, and the insertion slot is disposed on the pressing member.

4. The tray apparatus according to claim 3, wherein the pressing mechanism comprises a first fastener, and the insertion member is detachably connected to the base main body via the first fastener.

5. The tray apparatus according to claim 4, wherein the insertion member is provided with a countersunk hole, the first fastener passes through the countersunk hole in the first direction and is screwed into the base main body, and an end cap of the first fastener is located in the countersunk hole.

6. The tray apparatus according to any one of claims 1 to 5, wherein the pressing member is of an integral structure.

7. The tray apparatus according to any one of claims 1 to 5, wherein the pressing member comprises a connection block and a pressing block, the connection block and the pressing block are of a split-type structure, the pressing block is disposed on a side of the connection block facing the battery module group, the pressing block is configure to be in contact with the end plate of the battery module group, and the insertion slot or the insertion member is disposed on the connection block.

8. The tray apparatus according to claim 7, wherein the pressing block is a plastic member or a rubber member; and/or, the connection block is a metal piece.

9. The tray apparatus according to claim 7 or 8, wherein the pressing mechanism comprises a second fastener, and the pressing block is detachably connected to the connection block via the second fastener.

10. The tray apparatus according to claim 7, wherein a groove is formed on the connection block, the pressing member comprises a limiting block, the limiting block and the connection block are of a split-type structure, and the limiting block is disposed at an edge of the groove and defines the insertion slot with the groove.

11. The tray apparatus according to claim 10, wherein a recessed region is disposed on a side of the connection block facing the mounting base, the limiting block is disposed in the recessed region, and the limiting block does not protrude from a surface of the connection block on the side facing the mounting base.

12. The tray apparatus according to claim 11, wherein the pressing member comprises a third fastener, and the connection block is detachably connected to the limiting block via the third fastener.

13. The tray apparatus according to any one of claims 1 to 12, wherein the pressing mechanism comprises a driving mechanism and a pair of side plate tools, the pair of side plate tools is configured to bear the battery module group, and the driving mechanism is configured to drive the side plate tools to move in directions away from each other or directions close to each other, to adjust a distance between the two side plate tools.

14. The tray apparatus according to claim 13, wherein the tray apparatus comprises a guide rail, the guide rail is disposed on the tray, and the guide rail is in sliding fit with the pair of side plate tools and configured to guide the side plate tools in a sliding manner.

15. The tray apparatus according to claim 13 or 14, wherein the driving mechanism comprises a power source, a gear, and two racks, one rack is connected to one side plate tool, the other rack is connected to the other side plate tool, and the gear is simultaneously meshed with the two racks; and
the power source is configured to drive the one rack to reciprocate linearly, and the one rack drives, via the gear, the other rack to move in an opposite direction; or, the power source is configured to drive the gear to rotate, thereby driving, via the gear, the two racks to move in opposite directions.

16. The tray apparatus according to any one of claims 1 to 15, wherein there are at least two pressing mechanisms, and the pressing mechanisms are arranged side by side in a manner perpendicular to the first direction; a single pressing mechanism comprises a pair of side plate tools, and the pair of side plate tools is configured to bear the battery module group; and
the tray apparatus comprises at least two synchronization mechanisms, side plate tools of the pressing mechanisms on a first side in a side-by-side direction are connected via one part of the synchronization mechanisms, and side plate tools of the pressing mechanisms on a second side in the side-by-side direction are connected via the other part of the synchronization mechanisms, such that side plate tools of the pressing mechanisms on a same side in the side-by-side direction synchronously move with a same displacement in a same direction.

17. The tray apparatus according to claim 16, wherein the synchronization mechanism comprises a gas spring, the gas spring comprises a cylinder barrel and a piston rod, the piston rod is connected to a side plate tool of one pressing mechanism, and the cylinder barrel is connected to a side plate tool of another pressing mechanism.

18. A battery production line, comprising a gripping mechanism, a storage bin apparatus, and the tray apparatus according to any one of claims 1 to 17, wherein the storage bin apparatus is configured to store a plurality of pressing members, and the gripping mechanism is configured to remove and transfer, to the storage bin apparatus, a pressing member on the tray apparatus, and insert a target pressing member on the storage bin apparatus into a mounting base.

19. A method for replacing a pressing member of a tray apparatus, comprising:
clamping an existing pressing member on the tray apparatus, and moving the existing pressing member upward, such that an insertion slot on the existing pressing member disengages from an insertion member on a mounting base, or an insertion member on the pressing member disengages from an insertion slot on the mounting base; and
clamping a target pressing member, moving the target pressing member to a position above the mounting base, and moving the target pressing member from top to bottom, such that an insertion member on the target pressing member is inserted into the insertion slot on the mounting base, or an insertion slot on the target pressing member is inserted into the insertion member on the mounting base.

20. A method for replacing a pressing member of a tray apparatus, comprising:
controlling a gripping mechanism to clamp an existing pressing member on the tray apparatus, and controlling the gripping mechanism to move upward with a preset distance, to drive the existing pressing member to disengage from a mounting base;
controlling the gripping mechanism to transfer, to a material placement position of a storage bin apparatus, the existing pressing member that disengages from the mounting base;
controlling the gripping mechanism to grip a target pressing member on the storage bin apparatus, and to transfer the target pressing member to a position above the mounting base; and
controlling the gripping mechanism to move downward, to insert the pressing member on the mounting base.
